# EUROPÄISCHE PATENTANMELDUNG

(11) **EP 0 564 808 A1**
(43) Veröffentlichungstag der Anmeldung: **13.10.1993**
(21) Anmeldenummer: 93103198.3
(22) Anmeldetag: 27.02.1993
(51) Int. Cl.: E01F 9/01, F16B 21/12, F21V 21/10, B60Q 7/00

(54) **Leitkegelleuchteinrichtung**

(30) Priorität: 06.04.1992 DE 4211953
(71) Anmelder: Adolf Nissen Elektrobau GmbH + Co KG, D-25832 Tönning (DE)
(72) Erfinder: Peters, Okke, Dipl.-Ing., W-2251 Tetenbüll, Berghof (DE)
(74) Vertreter: Niedmers, Ole, Dipl.-Phys.

(57) **Zusammenfassung**

Es wird eine Leitkegelleuchteinrichtung (10) zum schnellen, provisorischen Absichern von Gefahrenstellen sowie Baustellen und dgl. im Straßenverkehrsbereich vorgeschlagen, umfassend ein Leuchtengehäuse (11) mit darin angeordneter Lampe (12) und wenigstens einer das Leuchtengehäuse (11) lichtaustrittsseitig abschließenden Linse (13, 14), einem Fußelement (15) zum Befestigen des Lampengehäuses (11) an dessen erster Seite (16) und einem an der zweiten Seite (17) des Fußelementes (15) befestigbaren, an einem auf einem Untergrund (20) positionierbaren kastenförmigen Batteriegehäuse (19) im wesentlichen vertikal ausgerichtet befestigten stangenförmigen Ständer (18), wobei der Ständer (18) und das Batteriegehäuse (19) im Innenraum eines ebenfalls auf einem Untergrund (20) positionierbaren Absperrelements (21) aufgenommen werden. Der stangenförmige Ständer (18) und das Fußelement (15) sind über ein im wesentlichen rechtwinklig zur Ständerachse (180) verschiebbares Klammerelement (22) miteinander lösbar verbindbar.

## Beschreibung

Die Erfindung betrifft eine Leitkegelleuchteinrichtung Zum schnellen, provisorischen Absichern von Gefahrenstellen sowie Baustellen und dgl. im Straßenverkehrsbereich, umfassend ein Leuchtengehäuse mit daran angeordneter Lampe und wenigstens einer das Leuchtengehäuse lichtaustrittsseitig abschließenden Linse, einem Fußelement zum Befestigen des Leuchtengehäuses an dessen erster Seite und einem an der zweiten Seite des Fußelements befestigbaren, an einem auf einem Untergrund positionierbaren, kastenförmigen Batteriegehäuse im wesentlichen vertikal ausgerichteten, stangenförmigen Ständer, wobei der Ständer und das Batteriegehäuse im Innenraum eines ebenfalls auf einem Untergrund positionierbaren Absperrelementes aufgenommen werden.

Leitkegelleuchteinrichtungen dieser Art sind seit langem bekannt und werden zum schnellen Absichern von Unfallbereichen oder sonstigen Gefahrenbereichen im Straßenverkehrsbereich eingesetzt, um zumindest provisorisch in ausreichendem Maße den Straßenverkehr auf die Gefahrenquelle aufmerksam zu machen. Leitkegelleuchteinrichtungen dieser Art werden in der Regel, da sie über eine eigene netzunabhängige Spannungsversorgung verfügen, bei Polizeifahrzeugen, ggf. bei sonstigen Baufahrzeugen, im Transport- bzw. Kofferraum mitgeführt und sind unmittelbar am Ort der Gefahrenquelle durch entsprechendes Einschalten sofort funktionsbereit, wobei sie dann nach Inbetriebsetzen ein kontinuierlich und/oder blitzendes Lichtsignal aussenden. Infolge des Aufbaus, d. h. des langgestreckten Ständers in Verbindung mit dem Batteriegehäuse, auf dem der Ständer befestigt ist, und einer Demontierbarkeit des Fußes mit dem darauf angeordneten Leuchtengehäuses vom Ständer sind die Lichtkegeleinrichtungen auch verhältnismäßig einfach in einem Kofferraum oder dgl. verstaubar und haben sich als im Einsatz äußerst praktisch erwiesen, da sie in den in der Regel von Polizeifahrzeugen immer mitgeführten pyramiden- bzw. kegelförmig ausgebildeten Sicherungshütchen derart leicht aufgenommen werden können daß lediglich das eigentliche Leuchtengehäuse praktisch am Pyramiden- bzw. Kegelkopf sichtbar ist. Es wird somit keine besondere kompliziert aufzubauende Standeinrichtung benötigt.

Obwohl derartige Leitkegelleuchteinrichtungen in der Regel zur provisorischen Absicherung von Gefahrenquellen und Baustellen verwendet werden können, können diese auch grundsätzlich zur längerzeitigen Baustellensicherung und dgl. eingesetzt werden, da das Zeitintervall letztlich von der Kapazität bzw. dem Leistungsvermögen der leitkegelleuchteinrichtungseigenen Spannungsversorgungseinrichtung abhängt.

Es hat sich bei diesen bekannten und an sich durchaus funktionsfähigen und auch ansonsten funktionalen Leitkegelleuchteinrichtungen gezeigt, daß diese im Bereich der Verbindung des Ständers mit dem Fußelement sowohl mechanisch bedingte als auch elektrisch bedingte Schwierigkeiten zeigen, die zu folgenschweren Nachteilen im zu sichernden Gefahrenbereich führen können, so daß unter bestimmten Umständen die Leitkegelleuchteinrichtung funktionsunfähig wird. Bisher wurde nämlich die Verbindung zwischen dem Fußelement und dem Ständer über eine Schraubverbindung durchgeführt, in die sich bisweilen infolge witterungsbedingter Einflüsse Wasser, ggf. sogar Eis bei niedrigen Temperaturen und umgebungsbedingter Staub- und Straßenschmutz einsetzte, so daß auf aufwendige Weise die Schraubverbindung unmittelbar vor dem Positionieren der Leitkegelleuchteinrichtung am Gefahrenort gereinigt werden mußte. Die bekannte Schraubverbindung an dieser Stelle hat darüber hinaus noch einen wesentlichen Nachteil, der darin besteht, daß es verhältnismäßig lange dauert, das Fußelement auf den Ständer heraufzuschrauben, wobei gerade das axiale Einsetzen beider Gewindeteile immer mit großer Sorgfalt durchgeführt werden muß und dafür erhebliche Zeit benötigt wird. Gerade aber an einem schnell zu sichernden Unfallort besteht vielfach diese Zeit für die vorangehend aufgezeigten Prozeduren nicht. Ein anderer wesentlicher Nachteil besteht schließlich in der elektrischen Kontaktgebung im Verbindungsbereich zwischen Ständer und Fußelement, zumal vielfach bei nicht sorgfältigem axialen Zusammenführen beider Teile der Verbindung Verkantungen im Kontaktbereich entstehen und somit gerade dann eine einwandfreie Kontaktgebung nicht erreicht wird, wenn diese kurzfristig, nämlich unmittelbar am Einsatzort eigentlich erreicht werden müßte.

Schließlich ist die bekannte Schraubverbindung auch nur auf verhältnismäßig aufwendige und kostenträchtige Weise bei der Herstellung realisierbar, da Gewindeverbindungen, wie bekannt, sehr sorgfältig hergestellt werden müssen.

Es ist Aufgabe der vorliegenden Erfindung, eine Leitkegelleuchteinrichtung der eingangs genannten Art zu schaffen, die eine sehr sichere und eine sehr schnelle Entfernbarkeit des Fußelementes mit daran angeordnetem Leuchtengehäuse vom stangenförmigen Ständer ermöglicht, so daß die Leitkegelleuchteinrichtung am zu sichernden Gefahrenort leicht demontiert, das Absperrelement über den Ständer gestülpt und nachfolgend wiederum schnell verbunden werden kann, wobei die Verbindung auf sehr einfache Weise fremdwerkzeugfrei vonstatten gehen kann und auf alle Fälle auch eine gute Kontaktgebung sichergestellt ist, wobei die Leitkegelleuchteinrichtung sehr viel einfacher als die bekannte Leitkegelleuchteinrichtung herstellbar sein soll und somit auch kostengünstiger als die bekannte Leitkegelleuchteinrichtung bereitstellbar sein soll.

Gelöst wird die Aufgabe gemäß der Erfindung, daß der stangenförmige Ständer und das Fußelement über ein im wesentlichen rechtwinklig zur Ständerachse verschiebbares Klammerelement miteinander lösbar verbindbar sind.

Die erfindungsgemäß vorgeschlagene Lösung hat den erheblichen Vorteil, daß, anders als bisher bei der bekannten Leitkegelleuchteinrichtung, keine gewindeförmige Verbindung mehr vorgesehen werden muß, d. h. es ist erfindungsgemäß eine sehr einfache aber sehr wirksame schnell ver- und entriegelbare Verbindung geschaffen worden, die auch ein innerhalb bestimmter Winkelbereiche vorgenommenes axiales Verkanten zwischen Fußelement und Ständer zuläßt, da beim Zusammenfügen eine automatische Zentrierung erfolgt und das Klammerelement auch Toleranzen sowohl in Axialrichtung als auch bei Winkeln zwischen beiden Achsen hinzunehmen vermag, ohne daß die Funktionsfähigkeit der Verbindung mit dem Klammerelement in Frage gestellt wird. Ein weiterer wesentlicher Nachteil der bisherigen Leitkegelleuchteinrichtung bestand in der durch die axiale Drehung zur Erreichung der Befestigungsendstellung an sich undefinierte Endstellungsrichtung. Das Leuchtengehäuse mußte somit, nachdem die Endstellung erreicht worden ist, mit den Lichtaustrittsflächen der Linse bzw. den Linsen in die gewünschte Richtung ausgerichtet werden. Mit der erfindungsgemäßen Lösung ist Derartiges nicht erforderlich, d. h. bei der Ausführung des Verbindungsvorganges mit dem Klammerelement kann die vorgewählte Richtung beliebig, d. h. schon vor dem Verbindungsvorgang festgelegt werden, so daß auch dadurch Zeit zum Ausrichten der Leitkegelleuchteinrichtung nicht mehr benötigt wird.

Gemäß einer vorteilhaften Ausgestaltung weist das Fußelement an seiner zum Ständer gerichteten Seite einen hohl ausgebildeten Vorsprung auf, in der das Klammerelement geführt wird und das in den in den Hohlraum des Vorsprungs eingesetzte Ständerende unterhalb eines daran ausgebildeten Flanschkragens ergreift. Dadurch ist gewissermaßen eine Zentrierung und axialen und radialen Kräften standhaltende Fixierung des entsprechenden Ständerendes im Vorsprung des Fußelementes möglich, wobei der Vorsprung auch bei geringer Winkelabweichung zwischen Vorsprungachse und Ständerachse eine Führungs- und Zentrierungsfunktion aufweist. Vorteilhaft ist dabei auch, daß der Ständer ansonsten keine kompliziert ausgebildete Form aufzuweisen braucht, da für die erfindungsgemäß vorgenommene Klemmverbindung das Klammerelement lediglich unter den Flanschkragen zu greifen braucht.

Bei einer weiteren vorteilhaften Ausgestaltung der Leitkegelleuchteinrichtung w eist der Vorsprung wenigstens zwei diesen sehnenartig durchquerende, fluchtende Löcher auf, die von einer darin geführten und vom ersten Loch zum zweiten Loch hin und her verschiebbaren Zunge des Klemmelements sehnenartig verbindbar sind. Die Löcher bilden somit auf einfache Weise im Vorsprung eine Führung für die hin und her verschiebbare Zunge, so daß keine zusätzlichen Führungsteile oder sonstige Führungsmaßnahmen erforderlich sind.

Der Vorsprung selbst ist vorteilhafterweise an seiner Außenseite im wesentlichen parallel zu den Löchern mit einem abgeflachten Bereich versehen, der als Führungsnut für den einen geraden, die Verschiebungsrichtung bestimmbaren Stegabschnitt des Klammerelementes dient. Diese Ausgestaltung ermöglicht es, daß das Klammerelement zusätzlich auch am Vorsprung außen eine Führung erfährt, so daß über diese derart gebildet Führungsnut, in der der Stegabschnitt geführt wird, die mit dem Stegabschnitt au ßen verbundene Zunge immer vom einen Loch bei der Verschiebung zum anderen Loch hin dieses auch tatsächlich trifft, selbst wenn beim Aufstecken auf das obere Ende des Ständers eine Berührung der Zunge mit dem Ständer erfolgt.

Bei einer noch anderen vorteilhaften Ausgestaltung der Leitkegelleuchteinrichtung weist der Stegabschnitt einen im wesentlichen darauf mittig angeordneten und erhaben zur Vorsprungachse vorstehenden Vorsprung auf, der derart ausgebildet ist, daß er sowohl in der Verriegelungsstellung als auch in der Entriegelungsstellung sich außen an die Oberfläche des Vorsprungs schmiegt und somit quasi rastende Endstellungen des Klammerelements im verriegelten un d entriegelten Zustand erreicht werden.

Das Klammerelement selbst ist vorteilhafterweise als im wesentlichen flaches Ringteil ausgebildet, das vor seiner Einsetzen in den Vorsprung bzw. das Fußelement als einstückiges Formteil auf einfache Weise hergestellt werden kann.

Obwohl grundsätzlich das Klammerelement aus jedem beliebigen geeigneten Werkstoff hergestellt werden kann, der zumindest teilweise elastische Eigenschaften aufweist, ist es vorteilhaft, weil kostengünstig her- und bereitstellbar, das Klammerelement aus wenigstens teilweise elastischem Kunststoffwerkstoff herzustellen.

Genau wie bisher bei der bekannten Leitkegelleuchteinrichtung der stangenförmige Ständer über eine Gewindeverbindung mit dem Fußelement verbunden war, die sehr problematisch zu befestigen war und die oben beschriebenen Nachteile hat, war bisher das Lampengehäuse, das auf der ersten Seite des Fußelements befestigt wird, mit einem ggf. integral mit dem übrigen Gehäuseteil ausgebildeten Flansch versehen und wurde über diesen Flansch ebenfalls mit Schraubmitteln oder sonstigen geeigneten Befestigungsmitteln an der ersten Seite des Fußelementes befestigt. Ein Lösen zu Wartungszwecken und ggf. zum Austausch der Linse, der Lampe oder sonstiger elektrischer bzw. elektronischer Bauteile oder einer vollständigen Entfernung des Lampengehäuses mit daran befestigten Linsen war bisher nur auf aufwendige Weise ebenso wie die vorher beschriebene Entfernung des stangenförmigen Ständers vom Fußelement möglich. Aus diesem Grund ist es vorteilhaft, die Leitkegelleuchteinrichtung derart auszubilden, daß das Fußelement an seiner zum Vorsprung entgegengesetzten Seite als Teil einer Renkverbindung ausgebildet ist, in die das zu seiner Aufnahme entsprechend ausgebildete Teil des Leuchtengehäuses einsteckbar und zum sicheren Halten verdrehbar ist sowie einen Flanschkragen aufweist wobei das Teil durch einen Drehansatz mit im wesentlichen kreisförmigem Querschnitt und durch einem auf dem Drehansatz angeordneten, im wesentlichen quaderförmigem Verriegelungskörper gebildet wird, dessen Breite im wesentlichen dem Durchmesser des Drehansatzes entspricht, während seine Länge größer als seine Breite ist. Damit wird vorteilhafterweise erreicht, daß das mit dem Fußelement verbundene Leuchtengehäuse durch eine einfache Dreh- und Längsbewegung abgezogen werden kann, so daß beispielsweise die Lampe auf einfache Weise ausgetauscht werden kann, ohne daß dazu Werkzeuge benötigt werden. Darüber hinaus gestattet das derart ausgebildete Fußelement auch ein problemloses Lösen des damit verbundenen Leuchtengehäuses, wenn beispielsweise Wasser, Schmutz oder Eis in den Verbindungsbereich zwischen Leuchtengehäuse und dem Fußelement eingedrungen ist, da die dadurch bewirkte Reibung zwischen Leuchtengehäuse und Fußelement aufgrund der gewählten Konstruktion keinen Einfluß auf die Bewegbarkeit des Leuchtengehäuses relativ zum Fußelement zum Verriegeln und Entriegeln hat. Die quaderförmige Kontur des Verriegelungskörpers hat bei einfacher Herstellbarkeit den Vorteil in Verbindung mit dem Drehansatz, daß das auf das Fußelement aufgesetzte Leuchtengehäuse in einer stabilen Stellung gehalten wird.

Auch weist vorteilhafterweise das Fußelement an seiner vom stangenförmigen Ständer wegweisenden Seite eine Halterungsöffnung zum Einbringen einer Lampenhalterung auf, so daß bei einem Lampenaustausch lediglich die Renkverbindung zwischen Fußelement und Leuchtengehäuse gelöst zu werden braucht und das Leuchtengehäuse abgezogen werden muß. Die Lampe selbst, die normalerweise über die Halterung in das Leuchtengehäuse hineinragt, steht dann zum Austausch der Lampe von allen Seiten zugänglich frei auf dem Fußelement. Darüber hinaus gestattet diese Art der Ausbildung auch noch einen schnellen Wechsel der Lampenhalterung als solcher, wenn beispielsweise am gleichen Ort anstelle von Blinklicht für bestimmte Einsatzzwecke auch Dauerlicht gewünscht wird.

Um eine gute Zugänglichkeit für ein Organ zum Inbetriebsetzen der Lichtkegelleuchteinrichtung zu schaffen, ist das Fußelement vorteilhafterweise an seinem Seitenbereich mit einem Schalter versehen, wobei das Betätigungselement des Schalters durch erhaben vom Seitenbereich vorstehende Stege wenigstens zweiseitig begrenzt wird. Diese Stege haben wiederum den Vorteil, daß dann, wenn unbeabsichtigterweise das Leuchtengehäuse auf einen Untergrund fällt, der Schalter sich nicht selbständig einschalten kann, da das Betätigungselement, das in der Regel eine Wipptaste ist, nicht in Funktion kommen kann, da die Stege weiter vom Fußelement erhaben wegstehen als die Höhe des Betätigungselements über dem Fußelement hoch ist. Somit wird auch verhindert, daß die Leitkegelleuchteinrichtung nicht selbsttätig, beispielsweise bei einer Lagerung im Kofferraum eines Kraftfahrzeugs einschaltet, wenn beispielsweise diese, wenn sie im Kofferraum und dgl. nicht gesichert ist und sich im Kofferraum hin und herbewegt.

Vorteilhafterweise weist das Fußelement auch eine von außen zugängliche Kontaktanordnung auf, die einer Fremdspannungsversorgung und/oder einer Ladespannungszuführung für die Batterie der Beleuchtungseinrichtung dient. Sollte tatsächlich einmal die Batterie der Beleuchtungseinrichtung aus nicht vorhersehbaren Gründen funktionsunfähig sein, kann über eine Kabelverbindung mit dem Polizeifahrzeug oder einem sonstigen anderen Fahrzeug durch Anschluß an das Bordspannungsnetz des Fahrzeugs die Beleuchtungseinrichtung über diese Kontakteinrichtung mit einer Fremdspannung versorgt werden oder aber dann, wenn es sich bei der Batterie um einen wiederaufladbaren Akkumulator handelt, kann über diese Kontaktanordnung eine Verbindung zu einer Ladespannungsquelle hergestellt werden.

Schließlich ist es von Vorteil, die Kontaktanordnung, die prinzipiell an jeder beliebigen geeigneten Stelle der Leitkegelleuchteinrichtung vorgesehen werden kann, im wesentlichen parallel zum Flanschkragen im Verriegelungskörper anzuordnen, so daß die Kontaktanordnung unmittelbar auf der Lampenhalterung, die in der Regel von einer gedruckten Schaltung oder dgl. gebildet wird, angebracht werden kann, wodurch eine einfache und kostengünstige Herstellbarkeit gewährleistet ist, da keine gesonderten Kabelverbindungen zur Lampenhalterung und dgl. vorgesehen werden müssen.

Grundsätzlich kann neben dem Klammerelement auch das Fußelement aus einem beliebigen geeigneten Werkstoff, einschließlich eines metallischen Werkstoffs bestehen.

Um aber eine einfache und kostengünstige Herstellbarkeit zu gewährleisten und auch eine möglichst geringe Masse vorzusehen, um bei einem Auffahren durch ein Kraftfahrzeug auf die Leitkegelleuchteinrichtung den entstehenden Schaden so weit wie möglich zu begrenzen, ist es schließlich vorteilhaft, das Fußelement auch aus einem Kunststoffwerkstoff herzustellen.

Die Erfindung wird nun unter Bezugnahme auf die nachfolgenden schematischen Zeichnungen anhand eines Ausführungsbeispieles eingehend beschrieben. Darin zeigen:

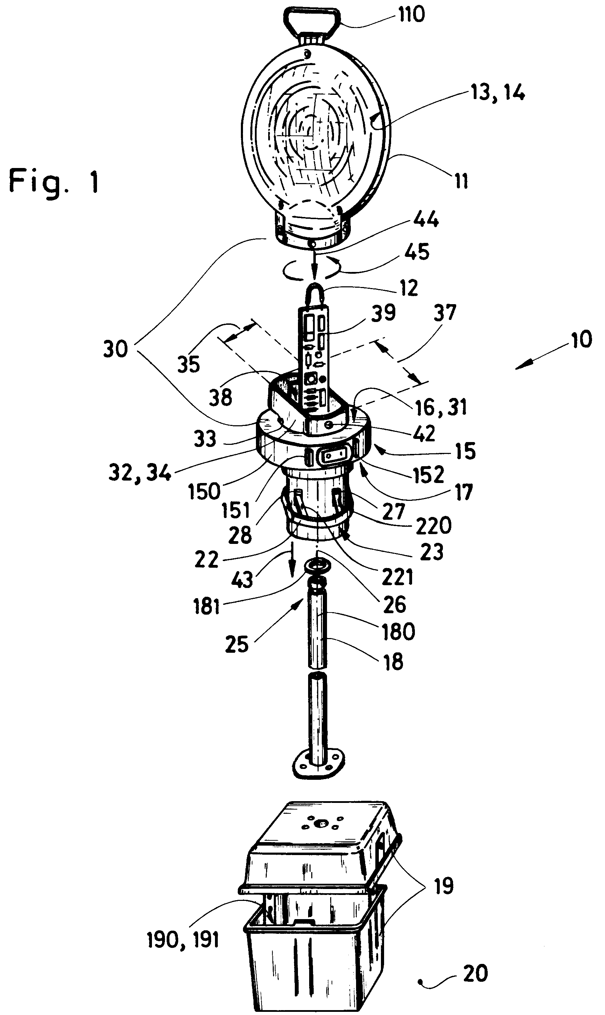

- Fig. 1: in perspektivischer, auseinandergezogener Darstellung eine Leitkegelleuchteinrichtung,
- Fig. 2: einen Schnitt durch den Vorsprung des Fußelementes unmittelbar oberhalb des Eintritts der Zungen des Klammerelementes in die im Vorsprung ausgebildeten Löcher in der Draufsicht unter Weglassung bestimmter Konstruktionsdetails in verriegelter Stellung,
- Fig. 3: eine Darstellung gemäß Fig. 2, jedoch in entriegelter Stellung,
- Fig. 4: ein tüten- bzw. pyramidenförmiges Absperrelement, das auf einem Untergrund abgestellt ist, mit im Innenraum des Absperrelementes angeordnetem Batteriegehäuse und einem darauf angeordneten Ständer sowie das mit dem Ständer verbindbare Fußelement in auseinandergezogener Darstellung unter Weglassung des Leuchtengehäuses und
- Fig. 5: in perspektivischer Darstellung ein zweigeteiltes Leuchtengehäuse der Leitkegelleuchteinrichtung in auseinandergezogener Darstellung.

Die Lichtkegelleuchteinrichtung 10 besteht im wesentlichen aus einem Leuchtengehäuse 11, das wenigstens eine daran aufgenommene, das Leuchtengehäuse 11 wenigstens einseitig abschließende Linse 13 aufweist. Das Leuchtengehäuse 11 kann aber auch zwei das Leuchtengehäuse 11 abschließende Linsen 13, 14 aufweisen. Darüber hinaus umfaßt die Leitkegelleuchteinrichtung 10 ein Fußelement 15 mit einer ersten und einer zweiten Seite 16, 17, wobei das Fußelement 15 im wesentlichen bei der in den Figuren dargestellten Ausgestaltung ein im wesentlichen axialsymmetrisches Gebilde ist. Schließlich umfaßt die Leitkegelleuchteinrichtung 10 einen Ständer 18, der im wesentlichen vertikal angeordnet mit einem Batteriegehäuse 19 verbunden ist.

Das Batteriegehäuse 19 steht auf einem Untergrund 20, so daß der Ständer 18 bei im wesentlichen horizontalem Untergrund im wesentlichen vertikal ausgerichtet ist. Das Fußelement 15 weist an seiner zum Ständer 18 gerichteten zweiten Seite 17 einen im wesentlichen rohrförmig ausgebildeten Vorsprung 23 auf. Im Vorsprung 23 ist ein hier nicht gesondert dargestellter Kontaktstecker vorgesehen, der in eine hier ebenfalls nicht gesondert dargestellte, im Bereich der Öffnung des Ständerendes 25 vorgesehene Gegenbuchse eingreift, wenn das Fußelement 15 mit dem Ständer 18 verbunden wird. Über diese Stecker-/ Buchseneinrichtung wird eine Spannungsversorgung aus der im Batteriegehäuse 19 vorgesehenen Batterie 190 zur Lampe 12 bzw. Schaltungsmitteln sichergestellt, die die Leuchtfunktion der Lampe 12 steuern. Wenn der Ständer 18 beispielsweise aus einem metallischen Werkstoff besteht, kann der Ständer 18 dabei einen Pol des elektrischen Leiters zur Lampe 12 bzw. zu den elektronischen Mitteln zur Steuerung der Lampe 12 bilden.

Es sei erwähnt, daß hier aus Vereinfachungsgründen der Begriff Batterie 190 sowohl für eine Monozelle als auch für einen wiederaufladbaren Akkumulator gewählt worden ist. Grundsätzlich ist sowohl eine Monozelle als auch ein wiederaufladbarer Akkumulator als Batterie 190 in der Leitkegelleuchteinrichtung 10 verwendbar.

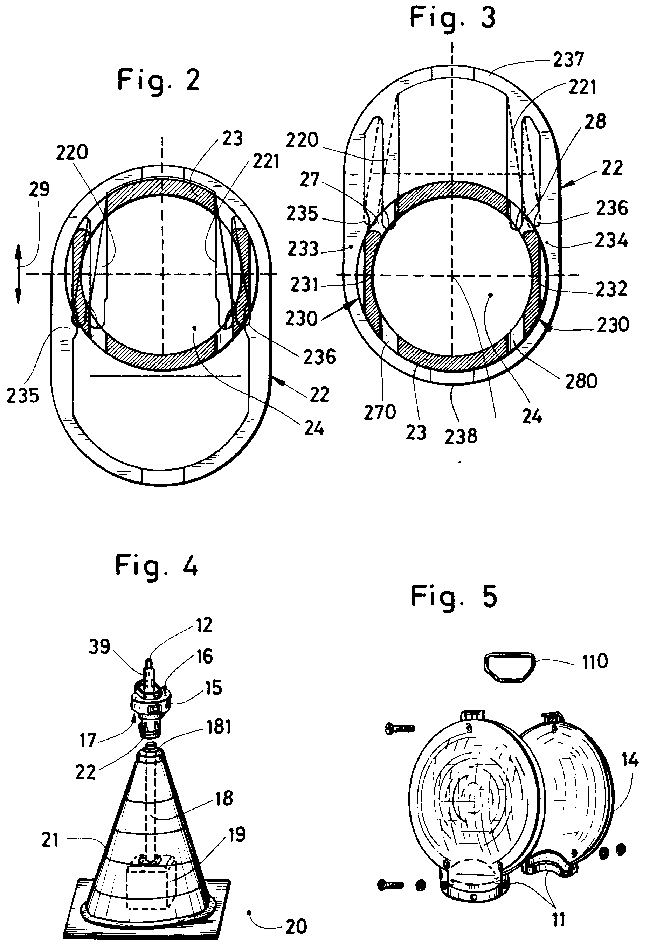

Das Fußelement 15 wird mit dem stangenförmigen Ständer 18 über ein im wesentlichen rechtwinklig zur Ständerachse 180 verschiebbares 29 Klammerelement 22 miteinander lösbar verbunden. Das Klammerelement 22 ist dabei als im wesentlichen flaches Ringteil ausgebildet, vgl. die Fig. 2 und 3, und weist dabei zwei im wesentlichen parallele Stegabschnitte 233, 234 auf, die an beiden Seiten durch jeweils halbkreisförmige Stegabschnitte 237, 238 miteinander verbunden sind. Am, bezogen auf die Fig. 2 und 3, oberen Stegabschnitt 237 sind im wesentlichen parallel zu den parallelen Stegabschnitten 233, 234 angeordnete Zungen 220, 221 angeordnet. Die Zungen 220, 221 sind derart voneinander beabstandet, daß sie in jeweils den Vorsprung 23 sehnenartig durchquerende, fluchtende Löcher 27, 270; 28, 280 hineinstehen können, vgl. Fig. 2. Die jeweils oberen ersten Löcher 27; 28, bezogen auf Fig. 3, dienen dabei als Führung für die Zungen 220, 221. Bei einer Verschiebung in Richtung der Verschiebungsrichtung 29 werden die Zungen 220; 221 derart geführt, daß diese den Hohlraum 24, in den das Ständerende 25 hineinragt, sehnenartig durchqueren. Der Vorsprung 23 weist an seiner Außenseite zwei im wesentlichen parallel zu den Löchern 27, 270; 28, 280 abgeflachte Bereich 231, 232 auf, die als Führungsnut für die geraden, die Verschiebungsrichtung 29 bestimmenden Stegabschnitte 233; 234 des Klammerelements dienen. Die Stegabschnitte 233, 234 weisen zudem im wesentlichen mittig angeordnete und erhaben zur Vorsprungsachse 26 vorstehende Vorsprünge 235, 236 auf, die sich sowohl im verriegelten als auch im entriegelten Zustand äußerlich an den Bereich des Überganges zwischen abgeflachten Bereichen 231, 232 und der Außenseite 230 des Vorsprungs 23 legen und somit quasi rastende Endstellungen bilden.

Wird das Fußelement 15 mit dem vorsprungseitigen Hohlraum 24 auf das Ständerende in Richtung des Pfeiles 43 gestülpt, durchquert das Ständerende 25 mit seinem daran fest angeordneten Flanschkragen 181 den Hohlraum 24, bis es an einem Anschlag innerhalb des Hohlraumes 24 zu liegen kommt. Dabei wird gleichzeitig das im wesentlichen zentral im Hohlraum 24 und axial zur Vorsprungsachse 26 angeordnete Steckerelement in Kontakt mit dem im Ständerende 25 angeordneten entsprechenden Buchsenelement gebracht. Nachfolgend wird das Klammerelement 22, vgl. Fig. 2, die die Öffnungsstellung darstellt, in Richtung des Pfeiles 29 im wesentlichen rechtwinklig zur Ständerachse 180, vgl. den die Verschiebungsrichtung darstellenden Pfeil 29, bewegt, so daß eine Stellung gemäß Fig. 2 angenommen wird. Damit wird der Flanschkragen 181 durch die beiden Zungen 220, 221 unterfangen, so daß der Ständer 18 relativ zum Fußelement 15 nicht mehr axial bewegbar ist.

Ein radiales Auseinanderdrücken entsprechend der gestrichelten Darstellung von Fig. 3 erlaubt ein Einsetzen bzw. Demontieren des Klammerelements 220 am Vorsprung 23 bzw. vom Vorsprung 23. Bedingt durch die wenigstens teilweise federnde Ausgestaltung des Werkstoffs des Klammerelements 22 können die Zungen 220, 221 auf vorbeschriebene Weise elastisch verschoben werden.

Eine Demontage des Ständers 18 vom Fußelement 15 erfolgt prinzipiell auf die gleiche Weise wie vorangehend im Zusammenhang mit der Montage beschrieben, jedoch in umgekehrter Schrittfolge.

Das Fußelement 15 weist an seiner ersten Seite eine Renkverbindung 30 auf. Das dortige Renkverbindungsteil 32 ist in ein entsprechend ausgebildetes Teil des Leuchtengehäuses 11 einsteckbar und zum sicheren Halten verdrehbar. Dazu weist das Fußelement einen Flanschkragen 31 und einen Drehansatz 33 auf, die Teil des Fußelements 15 sind. Das Teil 32 wird zudem durch einen im wesentlichen quaderförmigen Verriegelungskörper 34 gebildet, dessen Breite 35 im wesentlichen dem Durchmesser 36 des Drehansatzes 33 entspricht. Die Länge 37 des quaderförmigen Verriegelungskörpers 34 ist größer als seine Breite 35. Das Leuchtengehäuse 11, das entsprechend dem vorgeschriebenen Renkverbindungsteil in seiner Eintrittsöffnung 111 ausgebildet ist, wird zur Verbindung mit dem an der ersten Seite 16 des Fußelements 15 ausgebildeten Renkverbindungsteil 32 dadurch verbunden, das es zunächst in Richtung des Pfeil es 44 soweit axial verschoben wird, daß es auf dem Flanschkragen 31 zu liegen kommt und wird dann entsprechend der Richtung des Pfeiles 46 um die Achse des Gesamtsystems gedreht, und zwar in Richtung des Pfeiles 45. Ein Lösen des Lampengehäuses 11 vom Fußelement erfolgt in gleicher Weise wie vorangehend beschrieben, jedoch in umgekehrter Schrittfolge.

Im Fußelement 15 ist im quaderförmigen Verriegelungskörper 34 eine Halterungsöffnung 38 vorgesehen, in die die Lampenhalterung 39, auf der elektronische Bauelemente angeordnet sind, eingebracht werden kann. Die Halterungsöffnung 38 ist derart ausgebildet, daß die Lampenhalterung 39, die durch eine schmale gedruckte Schaltung gebildet wird, und an deren vorderem Ende die eigentliche Lampe angeordnet ist, geführt und geklemmt gehalten werden kann. Zusätzliche Befestigungselemente sind nicht vorzusehen.

Das Fußelement 15 ist im Bereich des Verriegelungskörpers mit einer Kontaktanordnung 42, die hier im einzelnen nicht weiter dargestellt ist, versehen, in die im wesentlichen parallel zum Flanschkragen 31 von außen ein Stecker zur externen Spannungs-und/oder Ladespannungszuführung hineingesteckt werden kann, um beispielsweise die Leitkegelleuchteinrichtung 10 mit einer externen Versorgungsspannung oder aber mit einer Ladespannung zu versorgen, falls als Batterie 190 ein wiederaufladbarer Akkumulator verwendet wird.

Schließlich weist die Leitkegelleuchteinrichtung 10 einen Schalter 40 zur Inbetriebnahme auf. Das eigentliche Betätigungsorgan des Schalters wird seitlich durch zwei gegenüberliegend angeordnete, vom Seitenbereich 150 des Fußelements 15 im wesentlichen erhaben vorstehende Stege 151, 152 begrenzt. Die Stege 151, 152 sind so hoch, daß sie, bezogen auf den Seitenbereich 150 des Fußelements 15, höher als das Betätigungselement 41 des Schalters 40 sind. Die Stege 151, 152 dienen der Verhinderung eines unbeabsichtigten Inbetriebsetzens der Leitkegelleuchteinrichtung 10, falls diese unbeabsichtigterweise auf einen Untergrund 20 oder dgl. fällt, oder aber ungesichert im Kofferraum eines Fahrzeugs während des Fahrens hin und her verrutscht und gegen Gegenstände bzw. Einrichtungen stößt, was normalerweise dann ein an sich unbeabsichtigtes Betätigen des Betätigungselements 41 zur Folge hätte.

Es sei darauf hingewiesen, daß alle Elemente der Leitkegelleuchteinrichtung 10 grundsätzlich aus einem beliebigen geeigneten Werkstoff bestehen können. Es hat sich als vorteilhaft herausgestellt, das Leuchtengehäuse 11, das Fußelement sowie das Klammerelement 22 aus Kunststoff herzustellen, was gleichermaßen für das Batteriegehäuse 19 gilt. Das Batteriegehäuse 19 besteht dabei aus zwei säureresistenten Kunststoffhalbschalen, so daß auch ein Auslaufen der im Batteriegehäuseinnenraum 191 aufgenommenen Batterie und/oder eines Akkumulators keine nachteiligen Umwelteinflüsse nach sich zieht, da ein austretender Elektrolyt darin sicher aufgenommen und daraus entsorgt werden kann.

| Bezugszeichenliste | | | |
|---|---|---|---|
| 10 | Leitkegelleuchteinrichtung | 24 | Hohlraum (Vorsprung) |
| 11 | Leuchtengehäuse | | |
| 110 | Handgriff | 25 | Ständerende |
| 11 | ? Eintrittsöffnung | 26 | Vorsprungachse |
| 12 | Lampe | 27 | Loch |
| 13 | Linse | 270 | Loch |
| 14 | Linse | 28 | Loch |
| 15 | Fußelement | 280 | Loch |
| 150 | Seitenbereich | 29 | Verschiebungsrichtung |
| 151 | Steg | | |
| 152 | Steg | 30 | Renkverbindung |
| 16 | erste Seite (Fußelement) | 31 | Flanschkragen |
| 17 | zweite Seite (Fußelement) | 32 | Renkverbindungsteil |
| 18 | Ständer | | |
| 180 | Ständerachse | 33 | Drehansatz |
| 181 | Flanschkragen | 34 | Verriegelungskörper |
| 19 | Batteriegehäuse | | |
| 190 | Batterie | 35 | Breite |
| 191 | Batteriegehäuseinnenraum | 36 | Durchmesser |
| 20 | Untergrund | 37 | Länge |
| 21 | Absperrelement | 38 | Halterungsöffnung |
| 22 | Klammerelement | 39 | Lampenhalterung |
| 220 | Zunge | 40 | Schalter |
| 221 | Zunge | 41 | Betätigungselement |
| 23 | Vorsprung | | |
| 230 | Außenseite | 42 | Kontaktanordnung |
| 231 | Abflachung | 43 | Pfeil |
| 232 | Abflachung | 44 | Pfeil |
| 233 | Stegabschnitt | 45 | Pfeil |
| 234 | Stegabschnitt | | |
| 235 | Vorsprung | | |
| 236 | Vorsprung | | |
| 237 | Stegabschnitt | | |
| 238 | Stegabschnitt | | |

## Patentansprüche

1. Leitkegelleuchteinrichtung zum schnellen, provisorischen Absichern von Gefahrenstellen sowie Baustellen und dgl. im Straßenverkehrsbereich, umfassend ein Leuchtengehäuse mit einer darin angeordneten Lampe und wenigstens einer das Leuchtengehäuse lichtaustrittsseitig abschließenden Linse, einem Fußelement zum Befestigen des Leuchtengehäuses an dessen erster Seite und einem an der zweiten Seite des Fußelements befestigbaren, an einem auf einem Untergrund positionierbaren kastenförmigen Batteriegehäuse im wesentlichen vertikal ausgerichtet befestigten stangenförmigen Ständer, wobei der Ständer und das Batteriegehäuse im Innenraum eines ebenfalls auf einem Untergrund positionierbaren Absperrelementes aufgenommen werden, dadurch gekennzeichnet, daß der stangenförmige Ständer (18) und das Fußelement (15) über ein im wesentlichen rechtwinklig zur Ständerachse (180) verschiebbares Klammerelement (22) miteinander lösbar verbindbar sind.

2. Leitkegelleuchteinrichtung nach Anspruch 1, dadurch gekennzeichnet, daß das Fußelement (15) an seiner zum Ständer (18) gerichteten Seite einen hohl (24) ausgebildeten Vorsprung (23) aufweist, in dem das Klammerelement (22) geführt wird und das in den Hohlraum (24) des Vorsprungs (23) eingesetzte Ständerende (25) unterhalb eines daran ausgebildeten Flanschkragens (181) ergreift.

3. Leitkegelleuchteinrichtung nach Anspruch 2, dadurch gekennzeichnet, daß der Vorsprung (23) wenigstens zwei diesen sehnenartig durchquerende, fluchtende Löcher (27, 270; 28, 280) aufweist, die von einer darin geführten und vom ersten Loch (27; 28) zum zweiten Loch (270; 280) hin und her verschiebbaren Zunge (220; 221) des Klemmelement (22) sehnenartig verbindbar sind.

4. Leitkegelleuchteinrichtung nach Anspruch 3, dadurch gekennzeichnet, daß der Vorsprung (23) an seiner Außenseite (230) im wesentlichen parallel zu den Löchern (27, 270; 28, 280) einen abgeflachten Bereich (231; 232) als Führungsnut für den einen geraden, die Verschiebungsrichtung (29) bestimmbaren Stegabschnitt (233; 234) des Klammerelementes (22) aufweist.

5. Leitkegelleuchteinrichtung nach Anspruch 4, dadurch gekennzeichnet, daß der Stegabschnitt (233; 234) einen im wesentlichen darauf mittig angeordneten und erhaben zur Vorsprungsachse (26) vorstehenden Vorsprung (235; 236) aufweist.

6. Leitkegelleuchteinrichtung nach einem oder mehreren der Ansprüche 1 bis 5, dadurch gekennzeichnet, daß das Klammerelement (22) als im wesentlichen flaches Ringteil ausgebildet ist.

7. Leitkegelleuchteinrichtung nach einem oder mehreren der Ansprüche 1 bis 6, dadurch gekennzeichnet, daß das Klammerelement (22) aus wenigstens teilweise elastischem Kunststoffwerkstoff besteht.

8. Leitkegelleuchteinrichtung nach einem oder mehreren der Ansprüche 1 bis 7, dadurch gekennzeichnet, daß das Fußelement (15) an seiner zum Vorsprung (23) entgegengesetzten Seite (16) als Teil (32) einer Renkverbindung (30) ausgebildet ist, in die das zu seiner Aufnahme entsprechend ausgebildete Teil des Leuchtengehäuses (11) einsteckbar und zum sicheren Halten verdrehbar ist, sowie einen Flanschkragen (31) aufweist, wobei das Teil (32) durch einen Drehansatz (33) mit im wesentlichen kreisförmigem Querschnitt und durch einen auf dem Drehansatz (33) angeordneten, im wesentlichen quaderförmigen Verriegelungskörper (34) gebildet wird, dessen Breite (35) im wesentlichen dem Durchmesser (36) des Drehansatzes (33) entspricht, während seine Länge (37) größer als seine Breite (35) ist.

9. Leitkegelleuchteinrichtung nach einem oder mehreren der Ansprüche 1 bis 8, dadurch gekennzeichnet, daß das Fußelement (15) an seiner vom stangenförmigen Ständer (18) wegweisenden Seite (16) eine Halterungsöffnung (38) zum Einbringen einer Lampenhalterung (39) aufweist.

10. Leitkegelleuchteinrichtung nach einem oder mehreren der Ansprüche 1 bis 9, dadurch gekennzeichnet, daß das Fußelement (15) an seinem Seitenbereich (150) einen Schalter (40) zum Inbetriebsetzen der Leitkegelleuchteinrichtung (10) aufweist, wobei das Betätigungselement (41) des Schalters (40) durch erhaben vom Seitenbereich (150) vorstehende Stege (151, 152) wenigstens zweiseitig begrenzt wird.

11. Leitkegelleuchteinrichtung nach einem oder mehreren der Ansprüche 1 bis 10, dadurch gekennzeichnet, daß das FUßelement (15) eine von außen zugängliche Kontaktanordnung (42) aufweist, die einer Fremdspannungsversogrung und/oder einer Ladespannungszuführung für eine Batterie dient.

12. Leitkegelleuchteinrichtung nach Anspruch 11, dadurch gekennzeichnet, daß die Kontaktanordnung (32) im wesentlichen parallel zum Flanschkragen (31) im Verriegelungskörper (34) angeordnet ist.

13. Leitkegelleuchteinrichtung nach einem oder mehreren der Ansprüche 1 bis 12, dadurch gekennzeichnet, daß das Fußelement (15) aus Kunststoffwerkstoff besteht.
